# EUROPÄISCHE PATENTSCHRIFT

(11) **EP 3 730 342 B1**
(45) Veröffentlichungstag und Bekanntmachung des Hinweises auf die Patenterteilung: **22.09.2021**
(21) Anmeldenummer: 20152100.2
(22) Anmeldetag: 16.01.2020
(51) Int. Cl.: B60N 2/00, B60N 2/50

(54) **SITZBELEGUNGSERKENNUNG MIT BESCHLEUNIGUNGSSIGNAL**
SEAT OCCUPANCY DETECTION WITH ACCELERATION SIGNAL
DÉTECTION DE L'OCCUPATION DE SIÈGE À L'AIDE D'UN SIGNAL D'ACCÉLÉRATION

(30) Priorität: 29.01.2019 DE 102019102105
(43) Veröffentlichungstag der Anmeldung: 28.10.2020
(73) Patentinhaber: GRAMMER AG, 92289 Ursensollen (DE)
(72) Erfinder: Übelacker, Roland, 92536 Pfreimd (DE); Wittmann, Hubert, 92685 Floß (DE); Stahl, Tobias, 92726 Waidhaus (DE)
(74) Vertreter: Hannke, Christian

(56) Entgegenhaltungen:
- AU-A1- 2013 220 935
- DE-A1- 10 337 992
- DE-A1-102006 026 705

## Beschreibung

Die Erfindung betrifft ein System zur Sitzbelegungserkennung, umfassend einen Fahrzeugsitz für einen Fahrer mit einem Oberteil und mindestens einem Feder-Dämpfer-System, wobei ein Beschleunigungssensor am Oberteil angeordnet ist, welcher dazu ausgebildet ist, einen Verlauf einer Beschleunigung des Oberteils in Abhängigkeit einer Zeit zu erfassen, wobei eine Auswerteeinheit vorgesehen ist, welche dazu ausgebildet ist, eine Auswertung des Verlaufs der Beschleunigung zu erstellen und optional ein Signal an eine übergeordnete Steuereinheit zu senden.

Schwingungen des Oberteils des Fahrzeugsitzes, beispielsweise gegenüber einem Fahrzeugboden, einem Unterteil und/oder einem Fahrzeuguntergrund, treten quasi immer dann auf, wenn der Fahrzeugsitz und/oder das dazugehörige Fahrzeug im Betrieb ist. Diese Schwingungen werden beispielsweise beeinflusst durch die Vibrationen von zum Fahrzeug gehörender Komponenten (Beispiel Motor) und durch den Zustand des Fahrzeuguntergrunds (Beispiel Schlagloch). Im Folgenden werden der Einfachheit halber nur einachsige Beschleunigungen und Schwingungsvorgänge in Höhenrichtung (z-Richtung) des Fahrzeugsitzes betrachtet; die zugrundeliegenden Überlegungen gelten jedoch analog auch für mehrachsige Schwingungsvorgänge.

Außerdem existieren Sicherheitsvorschriften, welche vorsehen, dass das Fahrzeug oder am Fahrzeug angeordnete Aktoren oder Baugruppen nicht in Betrieb genommen werden dürfen oder auf Standby geschaltet werden müssen, wenn der Sitz nicht belegt ist. Eine derartige Baugruppe ist beispielsweise ein Mähwerk eines Mähdreschers. Hintergrund ist die Befürchtung, dass im Falle eines nicht-belegten Sitzes der Fahrer sich eventuell unzulässigerweise in der Nähe der noch aktiven Baugruppe befindet, um dort eine Wartungsarbeit durchzuführen, wobei das Verletzungsrisiko hier enorm hoch ist. Beispielsweise könnte der Fahrer sich am noch laufenden Mähwerk verletzen.

Um ein Abschalten solcher Aktoren durch die Steuerungseinheit zu vermeiden, ist es bekannt, dass Fahrer beispielsweise eine Werkzeugkiste oder eine Getränkekiste auf den Sitz stellen, so dass deren Gewicht ("tote Masse") seitens der Steuerungseinheit fälschlicherweise als Gewicht eines Fahrers interpretiert wird. Die Folge ist, dass die Aktoren aktiv bleiben. Ein gattungsgemässes System zur Sitzbelegungserkennung ist aus dem Dokument AU2013220935A1 bekannt. Dieses Dokument offenbart auch ein Verfahren zur Sitzbelegungserkennung eines solchen Systems.

Die Aufgabe der vorliegenden Erfindung ist es daher, eine automatische Erkennung des Sitzbelegungszustandes zu ermöglichen, um unter anderem das Verletzungsrisiko zu minimieren.

Die Aufgabe wird gelöst durch ein System zur Sitzbelegungserkennung gemäss dem Anspruch 1.

Die vorliegende Erfindung kann dabei beispielsweise bei Fahrzeugsitzen Anwendung finden, welche auf klassische Weise gefedert sind, bei welchen also beispielsweise das Oberteil gegenüber einem Unterteil federnd gelagert ist. Sie kann beispielsweise auch bei Fahrzeugsitzen Anwendung finden, bei welchen das Oberteil gegenüber dem Unterteil nicht federnd gelagert ist. Die nachfolgenden Erläuterungen gelten, wenn nicht anders erwähnt, für beide Fälle.

Es ist vorgesehen, dass der Fahrzeugsitz, beispielsweise unterhalb des Beschleunigungssensors, ein Feder-Dämpfer-System aufweist. Dies ist bei klassisch gefederten Sitzen beispielsweise mittels einer Federungseinheit umfassend mindestens eine Feder und/oder mindestens einen Dämpfer ausgebildet, welche bevorzugt zwischen dem Oberteil und dem Unterteil angeordnet sind; beispielsweise wird dieses Feder-Dämpfer-System durch ein Scherengestell unterstützt. Bei Sitzen, bei welchen das Oberteil gegenüber dem Unterteil nicht federnd gelagert ist, ist dieses Feder-Dämpfer-Element beispielsweise mittels Polsterteils und/oder mittels des Schaums des Polsterteils ausgebildet.

Bei allen Fahrzeugsitzen wird die Beschleunigung am Oberteil, beispielsweise an einer Oberfläche eines Polsterteils des Oberteils, gemessen.

Der Verlauf der Beschleunigung über der Zeit kann auch als Schwingungsdiagramm bezeichnet werden. Als Schwingungen werden im Allgemeinen wiederholte zeitliche Schwankungen von Zustandsgrößen eines Systems bezeichnet. Unter Schwankung ist dabei die Abweichung von einem Mittelwert zu verstehen. Die Zustandsgrößen können beispielsweise die Auslenkung (Weg), die Geschwindigkeit oder die Beschleunigung des schwingenden Systems sein.

Durch diese Zuordnung kann bereits ermittelt werden, ob der Sitz besetzt ist oder nicht. Wird der Sitz als besetzt erkannt, ist beispielsweise vorgesehen, dass ein entsprechendes Signal von der Auswerteeinheit an die übergeordnete Steuereinheit gesendet wird und/oder dass die Aktoren an der Maschine in Betrieb bleiben dürfen. Wird der Sitz als nicht-besetzt erkannt, ist beispielsweise vorgesehen, dass ein entsprechendes Signal an die übergeordnete Steuereinheit gesendet wird, woraufhin die Steuereinheit die Aktoren an der Maschine abschalten kann. Somit wird die Sicherheit des Fahrers erhöht.

Es wird also ausgenutzt, dass die dem Schwingungsdiagramm zugrunde liegenden Kenngrößen charakteristisch sind für den Schwingungszustand des Sitzes.

Periodische Schwingungen haben die Eigenschaft, dass sich ihre Funktionswerte in regelmäßigen Abständen wiederholen. Die Abstände zwischen dem Auftreten der gleichen Funktionswerte werden Periode genannt. Unterliegt also beispielsweise die Beschleunigung einer periodischen Schwingung, so wird nach der Dauer einer Periode jeweils der gleiche Beschleunigungswert wieder erreicht. Der Kehrwert 1/T der Periode T ist die Frequenz f (mit der Einheit Hertz oder Hz, wobei 1 Hz = 1/s). Die maximal auftretende Schwankung wird als Amplitude A bezeichnet.

Bei einem unbesetzten Fahrzeugsitz (Fall 2) ist beispielsweise zu beobachten, dass bei laufendem Fahrzeugmotor die dadurch verursachten Vibrationen ausgehend vom Motor durch die Federung ungedämpft in das Sitzoberteil eingeleitet werden. Der Sitz schwingt im Wesentlichen periodisch mit einer bestimmten Frequenz f2 und einer Amplitude A2. Ist der Sitz besetzt mit einem Fahrer (Fall 1), so kann vereinfacht angenommen werden, dass der Sitz mit einer Amplitude A1 und mit einer periodischen Frequenz f1 schwingt. Es darf davon ausgegangen werden, dass der Fahrer durch seine Masse die Vibrationen dämpft, so dass die Amplitude der Schwingung sinkt (A1 ist also beispielsweise kleiner als A2). Ebenfalls darf davon ausgegangen werden, dass die Frequenz sinkt, so dass f1 kleiner als f2 ist.

Ist nun eine tote Masse auf dem Sitz platziert (Fall 3), so kann vereinfacht angenommen werden, dass der Sitz mit einer Amplitude A3 und mit einer periodischen Frequenz f3 schwingt. Es darf davon ausgegangen werden, dass die tote Masse zwar die Vibrationen dämpft, so dass die Amplitude der Schwingung gegenüber dem Fall 2 sinkt (A3 ist also beispielsweise kleiner als A2). Ebenfalls darf davon ausgegangen werden, dass die Frequenz sinkt, so dass f3 kleiner als f2 ist. Allerdings kann angenommen werden, dass die Masse der Kiste, welche beispielsweise etwa 20 kg beträgt, kleiner ist als die Masse des Fahrers, so dass die Abnahme der Amplitude und die Abnahme der Frequenz im Fall 3 kleiner ist als im Fall 1. Es gilt also: A1 < A3 < A2 und f1 < f3 < f2.

Gleichzeitig kann davon ausgegangen werden, dass ein Fahrer sich anders verhält als die tote Masse. Insbesondere erfahren die eingeleiteten Schwingungen eine Dämpfung durch die Gliedmaßen und die Muskeln des Fahrers. Außerdem stützt sich der Fahrer eventuell auf dem Lenkrad oder eine Armauflagefläche ab, was im Schwingungsverhalten zu einem kleineren Einfluss der Masse des Fahrers führt. Ferner kann es sein, dass der Fahrer plötzliche Bewegungen ausführt, welche sich als plötzliche Beschleunigungen im Schwingungsdiagramm niederschlagen. Es kann also davon ausgegangen werden, dass die Schwingungen einer toten Masse und eines lebenden Fahrers sich auch dann unterscheiden werden, wenn das Gewicht beider gleich ist. Diese Unterschiede können vorteilhaft von dem erfindungsgemäßen System und mittels des erfindungsgemäßen Verfahrens detektiert werden, so dass auch hierüber eine Zuordnung erfolgen kann, ob und mit welchem Objekt (Fahrer oder tote Masse) ein Fahrzeugsitz belegt ist.

Es ist erfindungsgemäss vorgesehen, dass die Auswertung ein Amplitudenspektrum des Verlaufs der Beschleunigung umfasst, wobei die Auswerteeinheit ferner dazu ausgebildet ist, das Amplitudenspektrum mit mindestens einem zeitlich vorhergehenden Amplitudenspektrum und/oder mit mindestens einem vorgegebenen Amplitudenspektrum zu vergleichen.

Insbesondere ist also mit dem Begriff "Auswertung" eine Auswertung auf Basis des Schwingungsdiagramms a(t) und/oder eine Auswertung auf Basis des dazugehörigen Amplitudenspektrums a(f) zu verstehen.

Hier wird ausgenutzt, dass sich harmonische Schwingungsanteile aus dem Amplitudenspektrum der Schwingung relativ gut herauslesen lassen. Dafür kann bezüglich des Verlaufs der Schwingung als Auswertung ein Amplitudenspektrum (auch Frequenzspektrum genannt) ermittelt werden, beispielsweise mittels einer Fouriertransformation oder einer schnellen Fouriertransformation (FFT, Fast Fourier Transformation). Ein Schwingungssignal wird hier grundsätzlich als Superposition von verschiedenen Einzelsignalen gedeutet. Das resultierende Amplitudenspektrum ist also über der Frequenz aufgetragen und weist beispielsweise verschiedene Spektrallinien auf (Peaks), welche jeweils ein Maß für die Amplitude sowie für die Häufigkeit des Einzelsignals im betrachteten Zeitraum darstellen. Die Mathematik, welche der FFT zugrunde liegt, ist aus dem Stand der Technik bekannt und soll im Rahmen dieser Erfindung nicht näher betrachtet werden.

Ein Amplitudenspektrum einer einfachen Sinusschwingung weist im einfachsten Fall nur einen Peak auf oder einen Maximalpeak mit benachbarten kleineren Peaks.

Beispielsweise umfasst das System ebenfalls einen Datenspeicher. Beispielsweise umfasst der Datenspeicher abgespeicherte Schwingungsverläufe a0(t), a20(t) und a60(t) sowie dazugehörige abgespeicherte Amplitudenspektren a0(f), a20(f) und a60(f), wobei der Index 0 jeweils für einen unbesetzten Sitz gilt, der Index 20 jeweils für einen Sitz belegt mit einer toten Masse von 20 kg gilt und der Index 60 jeweils für einen Sitz gilt, welcher mit einem Fahrer von 60 kg besetzt ist. Es versteht sich, dass anstelle der angegebenen Massen natürlich auch Kennwerte anderer Massen verwendbar sind. Im Allgemeinen kann beispielsweise angenommen werden, dass ein Fahrer zumindest eine Masse von 50 kg aufweist, so dass sinnvollerweise auch Kennwerte zum entsprechenden Index 50 abspeicherbar und vergleichbar sind.

Ebenfalls ist es möglich, dass der Datenspeicher aus diesen vorgegebenen Schwingungsverläufen und dazugehörigen Amplitudenspektren bereits verschiedene Kennwerte analysiert hat: bezüglich der Schwingung a(t) einen Sollwert A00 für eine Amplitude des unbesetzten Sitzes, einen Sollwert A20 für eine Amplitude des Sitzes, welcher mit einer toten Masse von 20 kg besetzt ist, und einen Sollwert A60 für eine Amplitude des Sitzes, welcher mit einem Fahrer von 60 kg besetzt ist. Ferner umfasst der Datenspeicher beispielsweise bezüglich des Amplitudenspektrums a(f) einen Sollwert f00 für eine Frequenz des unbesetzten Sitzes, einen Sollwert f20 für eine Frequenz des mit einer toten Masse besetzten Sitzes und einen Sollwert f60 für eine Frequenz des Sitzes, welcher mit einem Fahrer von 60 kg besetzt ist. Ebenfalls ist es möglich, dass die Anzahl der Peaks sowie deren Abstand (zeitlich bei a(t) oder frequentiell bei a(f)) der Vorgaben a(t) und a(f) abgespeichert ist.

Um zu entscheiden, ob der Sitz besetzt ist oder nicht, kann die Auswerteeinheit beispielsweise eine erste Auswertung von a(t) durchführen, welche die maximale Auslenkung (Amplitude A') der Beschleunigung a(t) in einem bestimmten Zeitraum mit einem vorhergehenden Wert oder einem im Datenspeicher abgelegten Sollwert der Amplitude vergleicht. Wird seitens der Auswerteeinheit festgestellt, dass die Amplitude A' und der Sollwert A00 gleich sind, wird von einem unbesetzten Sitz ausgegangen. Wird seitens der Auswerteeinheit festgestellt, dass die Amplitude A' und der Sollwert A20 gleich sind, wird von einem mit einer Masse von 20 kg besetzten Sitz ausgegangen. In diesen beiden Fällen könnte die Steuerungseinheit also den Aktor abschalten. Wird seitens der Auswerteeinheit festgestellt, dass die Amplitude A' und der Sollwert A60 gleich sind, wird von einem mit einem Fahrer besetzten Sitz ausgegangen. In diesem Fall könnte die Steuerungseinheit also von einem Abschalten des Aktors absehen.

Es kann seitens der Auswerteeinheit auch eine zweite Auswertung von a(t) durchgeführt werden, welche einen Vergleich der Amplitudenspektren vorsieht. Dabei werden die Maximalpeaks sowie die dazugehörigen Frequenzen betrachtet. Die zweite Auswertung sieht also beispielsweise vor, die zu einem Maximalpeak gehörende Frequenz (f') des Amplitudenspektrums a(f) in einem bestimmten Zeitraum mit einem vorhergehenden Wert oder einem im Datenspeicher abgelegten Sollwert der Frequenz vergleicht. Wird seitens der Auswerteeinheit festgestellt, dass die Frequenz f' und der Sollwert f00 gleich sind, wird von einem unbesetzten Sitz ausgegangen. Wird seitens der Auswerteeinheit festgestellt, dass die Frequenz f' und der Sollwert f20 gleich sind, wird von einem mit einer toten Masse besetzten Sitz ausgegangen. In diesen beiden Fällen könnte die Steuerungseinheit also den Aktor abschalten. Wird seitens der Auswerteeinheit festgestellt, dass die Frequenz f' und der Sollwert f60 gleich sind, wird von einem mit einem Fahrer besetzten Sitz ausgegangen. In diesem Fall könnte die Steuerungseinheit also von einem Abschalten des Aktors absehen.

Ebenfalls ist es möglich, dass die erste und/oder die zweite Auswertung einen Vergleich der Schwingungsdiagramme zweier verschiedener Zeitpunkte t1 und t2 durchführt. Beispielsweise sei t1 = 0 und t2 = 10 s. Auch zwischen diesen beiden Diagrammen lässt sich ein Vergleich der Amplituden und/oder der Frequenzen wie beschrieben durchführen.

Es ist natürlich sowohl bei der ersten Auswertung als auch bei der zweiten Auswertung möglich, den Vergleich mit einer gewissen Toleranz stattfinden zu lassen, so dass beispielsweise die Bedingung A' = A00 seitens der Auswerteeinheit auch dann bejaht wird, wenn der eigentliche Wert von A' in einem Bereich von (1-p)*A00 bis (1+p)*A00 liegt. Beispielsweise ist p aus einem Bereich von 0,01 bis 0,1; und beispielsweise ist p = 0,05.

Wie oben beschrieben, ist es also gemäß einer bevorzugten Ausführungsform vorteilhaft, wenn die Auswerteeinheit ferner dazu ausgebildet ist, eine Abweichung zwischen einer einem Maximalpeak des ermittelten Amplitudenspektrums zuordenbaren ersten Frequenz und einer einem Maximalpeak des verglichenen Amplitudenspektrums zuordenbaren zweiten Frequenz festzustellen. Dies ist beispielsweise hilfreich, um die Zustände "Sitz unbesetzt", "Sitz besetzt mit toter Masse" und "Sitz besetzt mit Fahrer" zu unterscheiden.

Es ist also vorteilhaft, wenn die Auswerteeinheit ferner dazu ausgebildet ist, den Verlauf der Beschleunigung auszuwerten und mit mindestens einem zeitlich vorhergehenden Verlauf und/oder mit mindestens einem vorgegebenen Verlauf zu vergleichen. Aus dieser Kurve können verschiedene Aussagen ermittelt werden. Beispielsweise kann ein Maximalwert der Amplitude in einem bestimmten Zeitraum in verschiedenen Diagrammen oder mit Sollwerten verglichen werden (analog zur oben beschriebenen Vorgehensweise).

Um die oben genannten Zuordnungen zu erleichtern, kann es auch vorgesehen sein, dass die Auswertung das Erstellen einer Hüllkurve eines Verlaufs a(t) umfasst. Diese Hüllkurve kann dann wie beschrieben mit vorgegebenen oder vorhergehenden Hüllkurven verglichen werden. Die Hüllkurve wird auch "Einhüllende" genannt und bezeichnet bei Schwingungen den Verlauf der Amplitude. Beispielsweise werden also die Werte des Verlaufs a(t) an den Amplituden, welche die Maxima der Schwingung a(t) darstellen, als Punkte markiert (die Minima werden zunächst ignoriert). Dann werden diese Punkte nacheinander miteinander verbunden, so dass eine Hüllkurve resultiert. Die Hüllkurve kann beispielsweise hinsichtlich ihres Verlaufs (in einem bestimmten Zeitraum beispielsweise fallend beim "Einsteigen" und steigend beim "Verlassen") oder ihrer Stetigkeit (stetig bei den beschriebenen Zuständen und nicht-stetig bei den beschriebenen Vorgängen) verglichen werden. Der Ausdruck "Stetigkeit" soll hier hinsichtlich dessen mathematischer Interpretation gedeutet werden; anschaulich ausgedrückt ist eine Funktion dann stetig, wenn sie keine "Sprünge" macht.

Es ist also vorteilhaft, wenn die Auswerteeinheit ferner dazu ausgebildet ist, dem Verlauf der Beschleunigung mindestens eine Hüllkurve zuzuordnen und einen Verlauf der mindestens einen Hüllkurve auszuwerten.

Hier wird die Tatsache genutzt, dass ein Fahrer oft zumindest nicht über einen längeren Zeitraum eine vollkommen periodische Schwingung mit nur einer Frequenz verursacht; im Gegenteil ist es aus der Praxis bekannt, dass ein entsprechender Verlauf a(t) oft kleinere oder größere Peaks aufweist, welche aus den Bewegungen des Fahrers resultieren. Eine tote Masse hingegen kann derartige Bewegungen nicht durchführen; die Hüllkurve wird also weitestgehend konstant bleiben. Es ist also beispielsweise möglich, die Steigung und/oder die Stetigkeit einer Hüllkurve zu untersuchen. Ist über einen vorbestimmbaren Zeitraum die Steigung gleich Null und/oder die Stetigkeit gewährleistet, so wird davon ausgegangen, dass der Sitz von einer toten Masse belegt ist. Ist über einen vorbestimmbaren Zeitraum die Steigung nicht oder nicht ausschließlich gleich Null und/oder die Stetigkeit nicht oder nicht ausschließlich gewährleistet, so wird davon ausgegangen, dass der Sitz von einem Fahrer belegt ist. Diese Untersuchung kann parallel oder alternativ zum Frequenzvergleich stattfinden.

Die Aufgabe der Erfindung wird auch gelöst von einem Verfahren zur Sitzbelegungserkennung innerhalb eines Systems gemäss dem Anspruch 6.

Das erfindungsgemäße Verfahren gilt insbesondere für ein System gemäß einem der Systemansprüche. Alle im Zusammenhang mit dem erfindungsgemäßen System beschriebenen Ausführungsbeispiele und deren Vorteile gelten vorteilhaft auch für das erfindungsgemäße Verfahren.

Es sei erwähnt, dass die Ausdrücke "Einsitzen" und "Besetzen" jeweils den gleichen Vorgang beschreiben, gemäß welchem ein Fahrer auf dem Sitz Platz nimmt. Ferner sei erwähnt, dass die Ausdrücke "Verlassen" und "Aufstehen" jeweils den gleichen Vorgang beschreiben, gemäß welchem ein Fahrer den Sitz verlässt.

Weitere Vorteile, Ziele und Eigenschaften vorliegender Erfindung werden anhand anliegender Zeichnung und nachfolgender Beschreibung erläutert, in welchen beispielhaft verschiedene Ausführungsformen des erfindungsgemäßen Fahrzeugsitzes dargestellt und beschrieben sind. In der Zeichnung zeigen:
- Fig. 1a: eine schematische Darstellung eines Fahrzeugs mit einem Fahrzeugsitz und einem Aktor;
- Fig. 1b: eine schematische Darstellung eines erfindungsgemäßen Systems;
- Fig. 2: ein Beispiel eines Verlaufs a(t);
- Fig. 3: ein aus dem Verlauf der Fig. 2 resultierendes Amplitudenspektrum a(f);
- Fig. 4: einen bevorzugten Ablauf des erfindungsgemäßen Verfahrens.

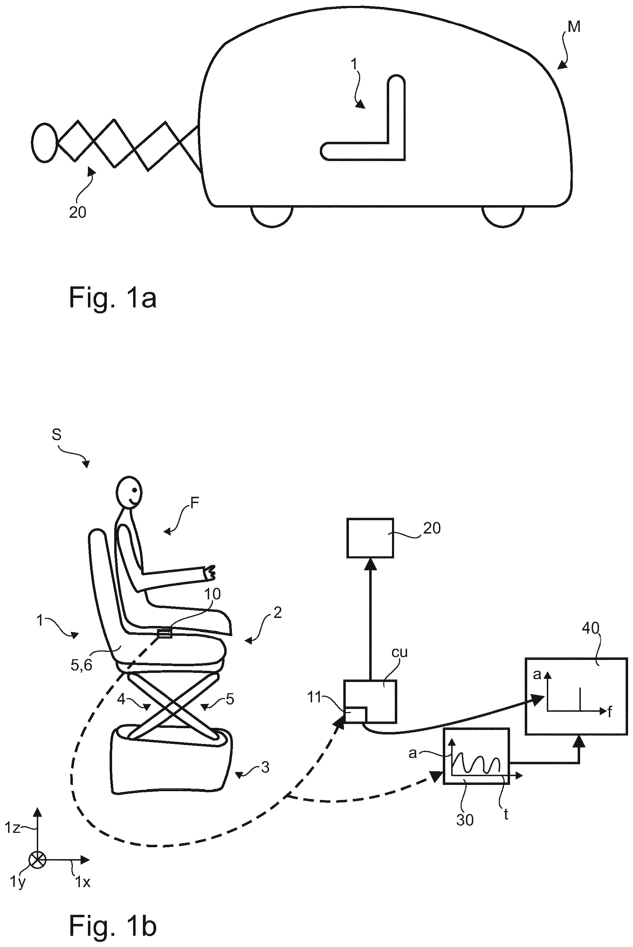

Gemäß der Fig. 1a ist stark vereinfacht ein Fahrzeug M mit einem Fahrzeugsitz 1 und einem Aktor 20 gezeigt. Beispielsweise ist das Fahrzeug M ein Mähdrescher und der Aktor 20 das dazugehörige Mähwerk.

Die Fig. 1b zeigt ein System (S) zur Sitzbelegungserkennung, umfassend den Fahrzeugsitz (1) für einen Fahrer (F) mit einem Oberteil (2) und einem Feder-Dämpfer-System (5). Vorliegend ist das Oberteil (2) mittels eines Scherengestells (4), welches beispielsweise von nicht gezeigten Federelementen und Dämpfungselementen des Feder-Dämpfer-Systems (5) unterstützt wird, gegenüber dem Unterteil (3) des Fahrzeugsitzes (1) federnd gelagert. Denkbar wäre auch, dass auf das Scherengestell (4) verzichtet wird und das Feder-Dämpfer-System (5) mittels des Polsterteils (6) des Oberteils (2) ausgebildet ist.

Zur Veranschaulichung ist ein kartesisches Koordinatensystem mit den Achsen 1x (Sitzlängsrichtung), 1y (Sitzbreitenrichtung) und 1z (Sitzhöhenrichtung) eingezeichnet.

Am Oberteil 2, vorliegend am Polsterteil (6) des Oberteils 2, ist ein Beschleunigungssensor (10) angeordnet, welcher dazu ausgebildet ist, einen Verlauf einer Beschleunigung (a) des Oberteils (2) in Abhängigkeit einer Zeit (t) zu erfassen. Ein Beispiel eines resultierenden Verlaufs ist als Diagramm 30 dargestellt. Dieser Beschleunigungssensor (10) sendet vorliegend den erfassten Verlauf an eine Auswerteeinheit (11).

Die Auswerteeinheit (11) ist vorliegend dazu ausgebildet, eine Auswertung (a') des Verlaufs (a(t)) der Beschleunigung (a) zu erstellen und ein Signal an eine übergeordnete Steuereinheit (CU) zu senden. Vorliegend ist die Auswertung als Amplitudenspektrum a(f) ausgebildet und als Beispiel im Diagramm 40 gezeigt.

Die Auswerteeinheit (11) ist nun dazu ausgebildet, die Auswertung (a') einem Wert einer Masse (m1, m2) eines Objekts (F, K) zuzuordnen, mit welchem der Fahrzeugsitz (1) aktuell belegt ist, beispielsweise mit einem Fahrer F oder einer Kiste K als toter Masse. Mit anderen Worten ist die Auswerteeinheit (11) dazu ausgebildet, die Auswertung (a') einem von mehreren Zuständen (J1, J2, J3) zuzuordnen, wobei die Zustände (J1, J2) ausgewählt sind aus einer Gruppe, welche einen besetzten Zustand (J1), einen nicht-besetzten Zustand (J2) des Fahrzeugsitzes (1) und einen mit einer toten Masse besetzten Zustand (J3) des Fahrzeugsitzes (1) umfasst. Beispielsweise erkennt die Auswerteeinheit vorliegend, dass der Fahrzeugsitz 1 durch den Fahrer F, welcher eine Masse von 60 kg aufweist, besetzt ist (Zustand J1).

Aufgrund der Signale der Auswerteeinheit 11 kann die Steuereinheit (CU) entscheiden, ob sie ein Signal an den Aktor 20 sendet, welches dessen Zustand ändert, oder nicht. Im vorliegenden Fall befindet sich der Fahrer F auf dem Fahrzeugsitz 1 und damit außerhalb des Gefahrenbereichs des Aktors 20, so dass hier beispielsweise kein Signal der Steuereinheit (CU) an den Aktor 20 erfolgt, oder ein Signal, damit der Aktor 20 in Betrieb genommen werden kann.

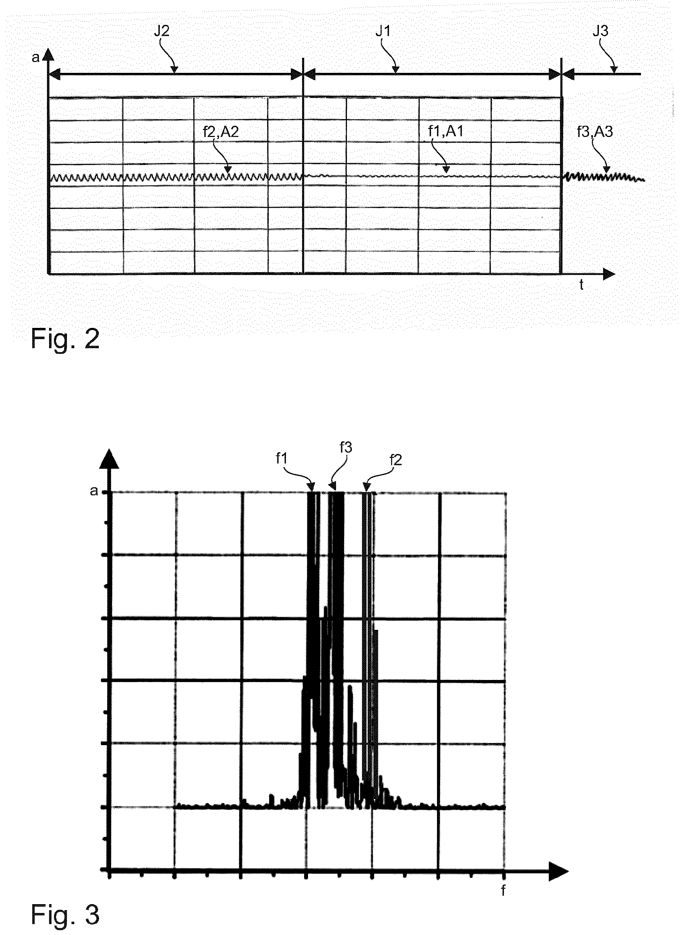

Die Fig. 2 zeigt nun einen Schwingungsverlauf a(t) mit drei zeitlich verschiedenen Abschnitten (ohne etwaige Zwischenabschnitte, welche den Tausch der Masse darstellen), welche nach einer Auswertung den Zuständen J1, J2 oder J3 zugeordnet werden können. Beispielsweise ist der erste Abschnitt dem Zustand J2 zuzuordnen, also dem unbesetzten Fahrzeugsitz 1. Der Sitz 1 schwingt hierbei im Wesentlichen periodisch mit einer bestimmten Frequenz f2 und einer Amplitude A2. Im zweiten Abschnitt ist der Sitz 1 besetzt mit einem Fahrer F, so dass der Sitz 1 mit einer Amplitude A1 und mit einer periodischen Frequenz f1 schwingt. Es gilt hier, dass A1 kleiner ist als A2, was aus dem Diagramm sofort herauslesbar ist, und dass f1 kleiner ist als f2 (siehe hier auch Fig. 3 zur Auswertung). Im dritten Abschnitt ist der Sitz 1 besetzt mit einer toten Masse, so dass der Sitz 1 mit einer Amplitude A3 und mit einer periodischen Frequenz f3 schwingt. Es gilt hier, dass A3 kleiner ist als A2, aber größer als A1, was aus dem Diagramm sofort herauslesbar ist, und dass f3 kleiner ist als f2, aber größer als f1 (siehe hier auch Fig. 3 zur Auswertung).

Mittels einer FFT wurde aus dem Verlauf der Kurve gemäß der Fig. 2 ein Amplitudenspektrum a(f) berechnet und gemäß der Fig. 3 dargestellt. Zu sehen ist, dass sich um drei Frequenzen f1, f2 und f3 herum mehrere Peaks anhäufen. Dies spiegelt nochmals deutlich wieder, dass sich die Frequenz f2 des unbesetzten Sitzes deutlich von der Frequenz f1 des besetzten Sitzes unterscheidet; ein Vergleich der beiden durch die Auswerteeinheit 11 kann also als Entscheidungsgrundlage für die Zuordnung des Zustands dienen. Gleiches gilt für die Frequenz f3; auch diese ist deutlich von den anderen beiden Frequenzen f1 und f2 unterscheidbar.

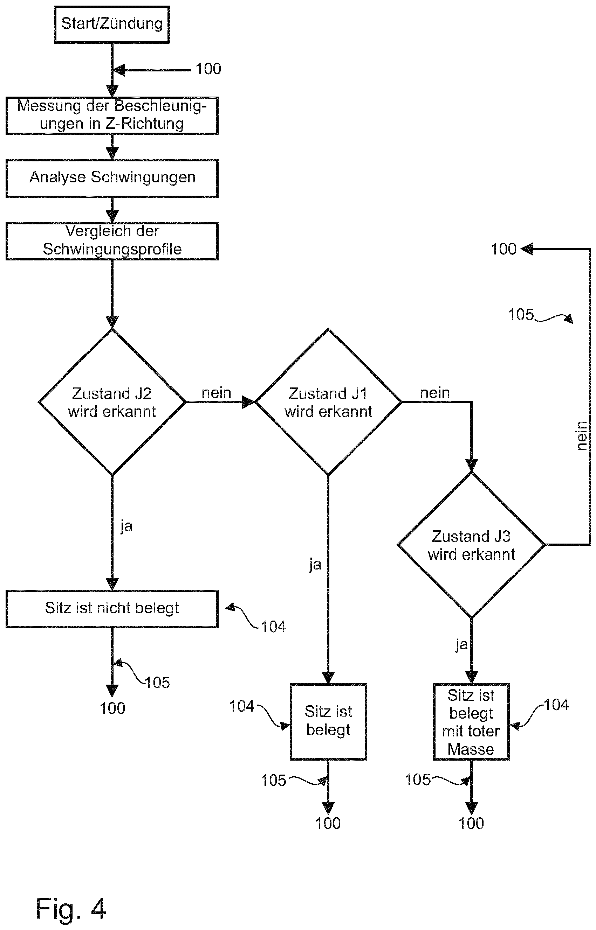

Die Fig. 4 zeigt einen bevorzugten Verlauf des erfindungsgemäßen Verfahrens 100 zur Sitzbelegungserkennung innerhalb eines Systems (S), das System (S) umfassend einen Fahrzeugsitz (1) für einen Fahrer (F) mit einem Oberteil (2) und mindestens einem Feder-Dämpfer-System (5), einen am Oberteil (2) angeordneten Beschleunigungssensor (10) sowie eine Auswerteeinheit (11). Nach dem Start des Motors umfasst die gezeigte Ausführungsform des Verfahrens 100 die folgenden Schritte:
(101) Erfassen eines Verlaufs (a(t)) einer Beschleunigung (a) des Oberteils (2) in Abhängigkeit einer Zeit (t) durch den Beschleunigungssensor (10),
(102) Erstellen einer Auswertung des Verlaufs (a(t)) der Beschleunigung (a) durch die Auswerteeinheit (11),
(103) Vergleich der Auswertung mit der Auswertung (a-1') eines zeitlich vorhergehenden Verlaufs (a(t)) oder mit einer vorgegebenen Auswertung (a0'),
(104) Zuordnung der Auswertung zu einem von mehreren Zuständen (J1, J2, J3), wobei die Zustände (J1, J2, J3) ausgewählt sind aus einer Gruppe, welche einen besetzten Zustand (J1), einen nicht-besetzten Zustand (J2) des Fahrzeugsitzes (1) und einen mit einer toten Masse besetzten Zustand (J3) des Fahrzeugsitzes (1) umfasst,
(105) Wiederholung der Schritte (101) bis (104) bis zu einem vorgebbaren Abbruchkriterium.

Dabei wird vorliegend zunächst geprüft, ob der unbelegte Sitz J2 erkannt wird. Falls nein, wird geprüft, ob der mit einem Fahrer belegte Sitz J1 erkannt wird. Falls nein, wird geprüft, ob der mit einer toten Masse belegte Sitz J3 erkannt wird. Falls auch hier keine Erkennung möglich ist, wird das Verfahren wiederholt.

Es versteht sich, dass es sich bei dem vorstehend erläuterten Ausführungsbeispiel lediglich um eine erste Ausgestaltung des erfindungsgemäßen Systems S und des erfindungsgemäßen Verfahrens 100 handelt. Insofern beschränkt sich die Ausgestaltung der Erfindung nicht auf dieses Ausführungsbeispiel.

### Bezugszeichenliste

- 1: Fahrzeugsitz
- 1x: Sitzlängsrichtung
- 1y: Sitzbreitenrichtung
- 1z: Sitzhöhenrichtung
- 2: Oberteil
- 3: Unterteil
- 4: Scherengestell
- 5: Feder-Dämpfer-System
- 6: Polsterteil
- 10: Beschleunigungssensor
- 11: Auswerteeinheit
- 20: Aktor
- 30,40: Diagramm
- 100: Verfahren
- 101-105: Schritt
- a, a(t): Beschleunigung
- CU: Steuereinheit
- f: Frequenz
- F: Fahrer
- J1, J2, J3: Zustand
- K: Kiste
- M: Fahrzeug
- S: System
- t: Zeit

## Patentansprüche

1. System (S) zur Sitzbelegungserkennung,
umfassend einen Fahrzeugsitz (1) für einen Fahrer (F) mit einem Oberteil (2) und mindestens einem Feder-Dämpfer-System (5),
wobei ein Beschleunigungssensor (10) am Oberteil (2) angeordnet ist, welcher dazu ausgebildet ist, einen Verlauf a(t) einer Beschleunigung (a) des Oberteils (2) in Abhängigkeit einer Zeit (t) zu erfassen,
wobei eine Auswerteeinheit (11) vorgesehen ist, welche dazu ausgebildet ist, eine Auswertung des Verlaufs (a(t)) der Beschleunigung (a) zu erstellen und optional ein Signal an eine übergeordnete Steuereinheit (CU) zu senden,
wobei die Auswerteeinheit (11) weiter dazu ausgebildet ist, die Auswertung (a') einem Wert einer Masse (m1, m2) eines Objekts (F, K) zuzuordnen, mit welchem der Fahrzeugsitz (1) aktuell belegt ist,
**dadurch gekennzeichnet, dass**
die Auswertung ein Amplitudenspektrum (a(f)) des Verlaufs der Beschleunigung (a) umfasst, wobei die Auswerteeinheit (11) ferner dazu ausgebildet ist, das Amplitudenspektrum (ai(f)) mit mindestens einem zeitlich vorhergehenden Amplitudenspektrum (ai-1(f)) und/oder mit mindestens einem vorgegebenen Amplitudenspektrum (a0(f)) zu vergleichen.

2. System (S) nach Anspruch 1,
**dadurch gekennzeichnet, dass**
die Auswerteeinheit (11) ferner dazu ausgebildet ist, eine Abweichung zwischen einer einem Maximalpeak (amax) des ermittelten Amplitudenspektrums (a(f)) zuordenbaren ersten Frequenz (f1) und einer einem Maximalpeak (amax) des verglichenen Amplitudenspektrum (a(f)) zuordenbaren zweiten Frequenz (f2) festzustellen.

3. System (S) nach Anspruch 1 oder 2,
**dadurch gekennzeichnet, dass**
die Auswerteeinheit (11) ferner dazu ausgebildet ist, eine Abweichung einer Anzahl (n) von Peaks und/oder diesen Peaks zuordenbarer Frequenzen zwischen dem ermittelten Amplitudenspektrum (a(f)) und dem verglichenen Amplitudenspektrum (a(f)) festzustellen.

4. System (S) nach einem der vorhergehenden Ansprüche,
**dadurch gekennzeichnet, dass**
die Auswerteeinheit (11) ferner dazu ausgebildet ist, den Verlauf (ai(t)) der Beschleunigung (a) auszuwerten und mit mindestens einem zeitlich vorhergehenden Verlauf (ai-1(t)) und/oder mit mindestens einem vorgegebenen Verlauf (a0(t)) zu vergleichen.

5. System (S) nach einem der vorhergehenden Ansprüche,
**dadurch gekennzeichnet, dass**
die Auswerteeinheit (11) ferner dazu ausgebildet ist, dem Verlauf (ai(t)) der Beschleunigung (a) mindestens eine Hüllkurve (h1) zuzuordnen und einen Verlauf der mindestens einen Hüllkurve (h1) auszuwerten.

6. Verfahren (100) zur Sitzbelegungserkennung innerhalb eines Systems (S), das System (S) umfassend einen Fahrzeugsitz (1) für einen Fahrer (F) mit einem Oberteil (2) und mindestens einem Feder-Dämpfer-System (5), einen am Oberteil (2) angeordneten Beschleunigungssensor (10) sowie eine Auswerteeinheit (11), umfassend die folgenden Schritte:
(101) Erfassen eines Verlaufs (a(t)) einer Beschleunigung (a) des Oberteils (2) in Abhängigkeit einer Zeit (t) durch den Beschleunigungssensor (10),
(102) Erstellen einer Auswertung des Verlaufs (a(t)) der Beschleunigung (a) durch die Auswerteeinheit (11), wobei die Auswertung ein Amplitudenspektrum (a(f)) des Verlaufs der Beschleunigung (a) umfasst,
(103) Vergleich der Auswertung mit der Auswertung (a-1') eines zeitlich vorhergehenden Verlaufs (a(t)) oder mit einer vorgegebenen Auswertung (a0') durch die Auswerteeinheit (11),
(104) Zuordnung der Auswertung zu einem von mehreren Zuständen (J1, J2, J3), wobei die Zustände (J1, J2, J3) ausgewählt sind aus einer Gruppe, welche einen besetzten Zustand (J1), einen nicht-besetzten Zustand (J2) des Fahrzeugsitzes (1) und einen mit einer toten Masse besetzten Zustand (J3) des Fahrzeugsitzes (1) umfasst,
(105) Wiederholung der Schritte (101) bis (104) bis zu einem vorgebbaren Abbruchkriterium.

## Claims

1. A system (S) for seat occupancy detection,
comprising a vehicle seat (1) for a driver (F) with an upper part (2) and at least one suspension-damper system (5),
an acceleration sensor (10) being arranged on the upper part (2) which is designed to record a characteristic a(t) of an acceleration (a) of the upper part (2) as a function of a time (t),
an evaluation unit (11) being provided which is designed to create an evaluation of the characteristic (a(t)) of the acceleration (a) and optionally to send a signal to a higher-level control unit (CU),
wherein the evaluation unit (11) is further designed to assign the evaluation (a') to a value of a mass (m1, m2) of an object (F, K) with which the vehicle seat (1) is currently occupied,
**characterised in that**
the evaluation comprises an amplitude spectrum (a(f)) of the characteristic of the acceleration (a), the evaluation unit (11) also being designed to determine the amplitude spectrum (ai(f)) with at least one temporally preceding amplitude spectrum (ai-1(f)) and/or with at least one predetermined amplitude spectrum (a0(f)).

2. The system (S) according to claim 1,
**characterised in that**
the evaluation unit (11) is further designed to detect a deviation between a first frequency (f1) which can be assigned to a maximum peak (amax) of the determined amplitude spectrum (a(f)) and a second frequency (f2) which can be assigned to the maximum peak (amax) of the compared amplitude spectrum (a(f)).

3. The system (S) according to claim 1 or claim 2,
**characterised in that**
the evaluation unit (11) is further designed to detect a deviation of a number (n) of peaks and/or frequencies assignable to these peaks between the determined amplitude spectrum (a(f)) and the compared amplitude spectrum (a(f)).

4. The system (S) according to any one of the preceding claims,
**characterised in that**
the evaluation unit (11) is further designed to evaluate the characteristic (ai(t)) of the acceleration (a) and to compare it with at least one temporarily preceding characteristic (ai-1(t)) and/or with at least one predetermined characteristic (a0(t)).

5. The system (S) according to any one of the preceding claims,
**characterised in that**
the evaluation unit (11) is further configured to assign at least one envelope curve (h1) to the characteristic (ai(t)) of the acceleration (a) and one characteristic of the at least one envelope curve (h1).

6. A method (100) for seat occupancy detection within a system (S),
the system (S) comprising a vehicle seat (1) for a driver (F) with an upper part (2) and at least one suspension-damper system (5), one acceleration sensor (10) arranged on the upper part (2) and an evaluation unit (11),
comprising the following steps:
(101) detecting a characteristic (a(t)) of an acceleration (a) of the upper part (2) as a function of a time (t) by the acceleration sensor (10),
(102) creating an evaluation of the characteristic (a(t)) of the acceleration (a) via the evaluation unit (11), wherein the evaluation comprises an amplitude spectrum (a(f)) of the characteristic of the acceleration (a)
(103) comparing the evaluation to the evaluation (a-1') of a temporally preceding characteristic (a(t)) or to a predetermined evaluation (a0') by the evaluation unit (11),
(104) assignment of the evaluation to one of a plurality of states (J1, J2, J3), the states (J1, J2, J3) being selected from a group which includes an occupied state (J1), an unoccupied state (J2) of the vehicle seat (1) and a state (J3) of the vehicle seat (1) occupied by a dead mass,
(105) repetition of steps (101) to (104) until reaching a predefinable termination criterion.

## Revendications

1. Système (S) pour la détection d'occupation de siège,
comportant un siège de véhicule (1) pour un conducteur (F) avec une partie supérieure (2) et au moins un système ressort-amortisseur (5),
un capteur d'accélération (10) étant disposé sur la partie supérieure (2), lequel est conçu pour détecter un tracé a(t) d'une accélération (a) de la partie supérieure (2) en fonction d'un temps (t),
une unité d'évaluation (11) étant prévue, laquelle est conçue pour établir une évaluation du tracé (a(t)) de l'accélération (a) et facultativement pour envoyer un signal à une unité de commande de niveau supérieur (CU),
l'unité d'évaluation (11) étant en outre conçue pour attribuer l'évaluation (a') à une valeur d'une masse (m1, m2) d'un objet (F, K) avec lequel le siège de véhicule (1) est actuellement occupé,
**caractérisé par le fait que**
l'évaluation comporte un spectre d'amplitude (a(f)) du tracé de l'accélération (a), l'unité d'évaluation (11) étant en outre conçue pour comparer le spectre d'amplitude (ai(f)) avec au moins un spectre d'amplitude précédent dans le temps (ai-1(f)) et/ou avec au moins un spectre d'amplitude prédéterminé (a0(f)).

2. Système (S) selon la revendication 1,
**caractérisé par le fait que**
l'unité d'évaluation (11) est en outre conçue pour déterminer un écart entre une première fréquence (f1) attribuable à un pic maximal (amax) du spectre d'amplitude déterminé (a(f)) et une seconde fréquence (f2) attribuable à un pic maximal (amax) du spectre d'amplitude comparé (a(f)).

3. Système (S) selon l'une des revendications 1 ou 2,
**caractérisé par le fait que**
l'unité d'évaluation (11) est en outre conçue pour déterminer un écart d'un nombre (n) de pics et/ou fréquences attribuables à ces pics entre le spectre d'amplitude déterminé (a(f)) et le spectre d'amplitude comparé (a(f)).

4. Système (S) selon l'une des revendications précédentes,
**caractérisé par le fait que**
l'unité d'évaluation (11) est en outre conçue pour évaluer le tracé (ai(t)) de l'accélération (a) et pour comparer avec au moins un tracé précédent dans le temps (ai-1(t)) et/ou avec au moins un tracé prédéterminé (a0(t)).

5. Système (S) selon l'une des revendications précédentes,
**caractérisé par le fait que**
l'unité d'évaluation (11) est en outre conçue pour attribuer au moins une courbe enveloppe (h1) au tracé (ai(t)) de l'accélération (a) et pour évaluer un tracé de ladite au moins une courbe enveloppe (h1).

6. Procédé (100) pour la détection d'occupation de siège à l'intérieur d'un système (S), le système (S) comportant un siège de véhicule (1) pour un conducteur (F) avec une partie supérieure (2) et au moins un système ressort-amortisseur (5), un capteur d'accélération (10) disposé sur la partie supérieure (2) ainsi qu'une unité d'évaluation (11),
comportant les étapes suivantes :
(101) détecter un tracé (a(t)) d'une accélération (a) de la partie supérieure (2) en fonction d'un temps (t) par le capteur d'accélération (10) ;
(102) établir une évaluation du tracé (a(t)) de l'accélération (a) par l'unité d'évaluation (11), l'évaluation comportant un spectre d'amplitude a(f) du tracé de l'accélération (a) ;
(103) comparer l'évaluation avec l'évaluation (a-1') d'un tracé précédent dans le temps (a(t)) ou avec une évaluation prédéterminée (a0') par l'unité d'évaluation (11) ;
(104) attribuer l'évaluation à l'un parmi plusieurs états (J1, J2, J3), les états (J1, J2, J3) étant choisis dans un groupe qui comporte un état occupé (J1), un état non occupé (J2) du siège de véhicule (1) et un état (J3) du siège de véhicule (1) occupé par une masse morte ;
(105) répéter les étapes (101) à (104) jusqu'à un critère de fin prédéterminable.
